# FASCICULE DE BREVET EUROPEEN

(11) **EP 1 799 471 B1**
(45) Date de publication et mention de la délivrance du brevet: **27.01.2010**
(21) Numéro de dépôt: 05797138.4
(22) Date de dépôt: 20.09.2005
(51) Int. Cl.: B60G 3/01, B60K 7/00

(54) **LIAISON AU SOL POUR VEHICULE COMPORTANT UNE ROUE ET UNE SUSPENSION INTEGREE A LA ROUE**
FAHRZEUGBODENVERBINDUNG MIT EINEM RAD UND EINER DARIN INTEGRIERTEN AUFHÄNGUNG
VEHICLE GROUND CONNECTION COMPRISING A WHEEL AND A SUSPENSION INTEGRATED THEREIN

(30) Priorité: 21.09.2004 FR 0409986
(43) Date de publication de la demande: 27.06.2007
(73) Titulaire: MICHELIN Recherche et Technique S.A., 1763 Granges-Paccot (CH)
(72) Inventeur: GASHI, Rexhep, CH-1752 Villars-sur-Glâne (CH); LAURENT, Daniel, CH-1723 Marly (CH)
(74) Mandataire: Lasson, Cédric Y. M.
(86) Numéro de dépôt international: PCT/EP2005/054708
(87) Numéro de publication internationale: WO 2006/032669

(56) Documents cités:
- EP-A- 0 744 313
- EP-A- 0 878 332
- GB-A- 897 619
- US-B1- 6 257 604

## Description

La présente invention concerne la liaison au sol de véhicules automobiles. Elle concerne en particulier les systèmes de liaison au sol dans lesquels la suspension verticale utilise une coulisse implantée à l'intérieur de la roue.

Par la demande de brevet EP 0878332, on connaît une telle liaison au sol dans laquelle le degré de liberté de suspension verticale du porte-roue par rapport au châssis du véhicule est permis par le mouvement d'un barreau vertical solidaire du porte-roue dans des moyens de guidage solidaires d'un support, le support étant lui-même lié au châssis. Cette liaison au sol intègre également un moteur rotatif de traction, des moyens de réduction reliant le moteur de traction à la roue, des moyens de freinage, un ressort de suspension, une machine électromécanique de contrôle des mouvements de suspension et un pivot permettant le braquage de la roue. La structure de cette liaison au sol permet effectivement d'assurer toutes les fonctions prévues.

Un objectif de l'invention est de proposer une liaison au sol du type précité dans laquelle le compromis poids-rigidité-encombrement soit sensiblement amélioré.

En effet, le poids d'une liaison au sol, en particulier le poids de sa partie non suspendue est une caractéristique essentielle pour les performances dynamiques du véhicule. La rigidité mécanique d'une liaison au sol est également une caractéristique essentielle. Une rigidité insuffisante peut avoir un effet négatif sur la qualité du guidage du plan de roue mais également des conséquences néfastes quant à la durée de vie des éléments de la liaison au sol, du fait par exemple de la fatigue des matériaux ou des usures liées aux frottements occasionnés par les déformations. On comprend que l'encombrement soit un aspect particulièrement important puisqu'un intérêt particulier de ce type de liaison au sol est d'intégrer l'ensemble des fonctions dans le volume intérieur de la roue.

L'homme du métier sait que ces trois aspects (poids, rigidité, encombrement) sont étroitement liés entre eux. On peut donc également dire que l'objectif de l'invention est de proposer une liaison au sol du type précité pour laquelle l'un au moins des trois aspects est significativement amélioré sans nécessairement pénaliser les autres aspects.

Cet objectif est atteint par une liaison au sol comprenant une roue, un porte-roue, des moyens d'entraînement de la roue par au moins un moteur rotatif solidaire du porte-roue, des moyens de réduction comprenant au moins une couronne dentée liée à la roue et au moins un pignon lié au moteur rotatif, une suspension à coulisse de la roue par rapport à un support lié au véhicule, des moyens de freinage, lesdits moyens de freinage comprenant un disque de frein lié par sa périphérie à la roue et une pince de frein disposée à l'intérieur du disque de frein. Le guidage de l'ensemble tournant comprenant la roue, le disque de frein et la couronne est assuré par une paire de roulements disposés autour d'une partie mâle du porte-roue. De préférence, le disque de frein, le pignon moteur et la couronne dentée sont disposés sensiblement dans un même plan.

Dans un mode de réalisation préféré, le pignon et la couronne ont une denture oblique, le pignon étant guidé par rapport au porte-roue par des moyens de guidage indépendamment de l'axe du moteur rotatif.

De préférence, la suspension à coulisse comporte un barreau solidaire du porte-roue, l'axe du barreau étant positionné sensiblement sur l'axe de la roue et sensiblement verticalement dans le plan central de la roue, le degré de liberté de suspension du porte-roue par rapport au châssis du véhicule étant permis par le mouvement du barreau dans des moyens de guidage liés au support.

De préférence, la liaison au sol selon l'invention comprend en outre une machine électromécanique de contrôle des mouvements de suspension. La machine électromécanique est avantageusement une machine rotative solidaire d'un pignon de suspension, ledit pignon coopérant avec une crémaillère solidaire du barreau.

Si la roue est une roue directrice, la liaison au sol selon l'invention comprend en outre une liaison pivotante des moyens de guidage par rapport au support afin de permettre le braquage de la roue autour d'un axe de pivot. De préférence, cet axe de pivot correspond sensiblement à l'axe du barreau.

D'autres objectifs et avantages de l'invention apparaîtront plus clairement dans la description qui va suivre d'un mode de réalisation préféré.
- La figure 1 est une vue plane selon l'axe de la roue d'un mode de réalisation préféré de la liaison au sol selon l'invention.
- La figure 2 est une vue en coupe dans le plan vertical passant par l'axe de la roue du mode de réalisation de la figure 1 (plan A-A sur la figure 1).
- La figure 3 est une demi-coupe axiale selon la ligne B-B du mode de réalisation de la figure 1.
- La figure 4 est une demi-coupe axiale selon la ligne C-C du mode de réalisation de la figure 1.
- La figure 5 est une vue éclatée en perspectives des principaux éléments de la liaison au sol de la figure 1.

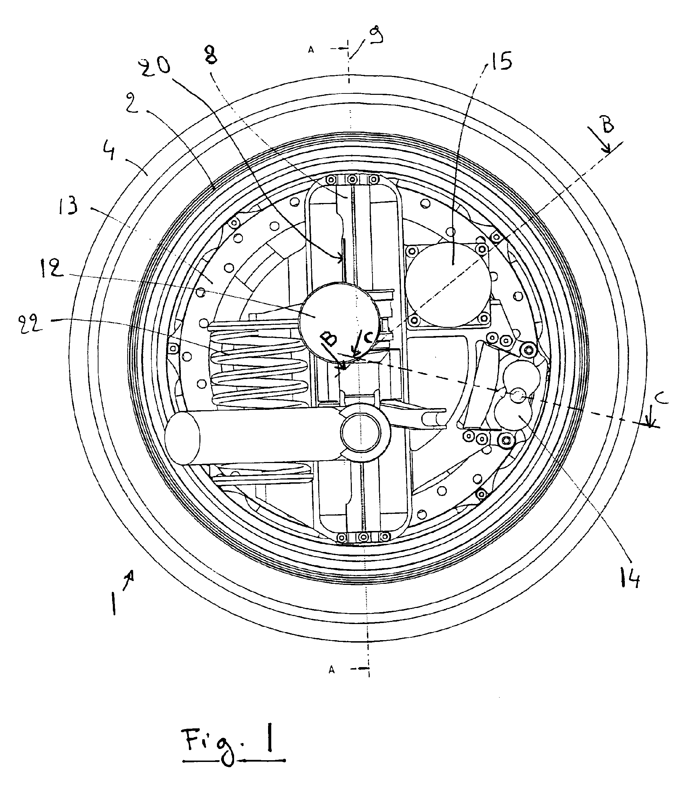

Sur les figures 1 à 4, on voit une roue 1 assemblée à partir d'une jante 2 et d'un disque de roue 3. On a représenté un pneumatique 4 monté sur la jante 2. La roue 1 est montée rotative autour de son axe 5 par l'intermédiaire de roulements 6 sur un porte-roue 7. Le porte-roue est solidaire d'un barreau 8 sensiblement vertical. Le barreau peut coulisser le long de son axe 9 par rapport à un support 10 par l'intermédiaire de moyens de guidage 11, par exemple à galets. Ce mouvement correspond au débattement de suspension de la liaison au sol selon l'invention. De préférence, le mouvement de suspension est contrôlé activement par une machine électromécanique rotative 12. Le support 10 est destiné à être lié à la caisse du véhicule, soit rigidement soit par une liaison permettant des degrés de liberté supplémentaires comme par exemple une variation de la hauteur de caisse et/ou du carrossage des roues, un filtrage des vibrations ou une suspension horizontale.

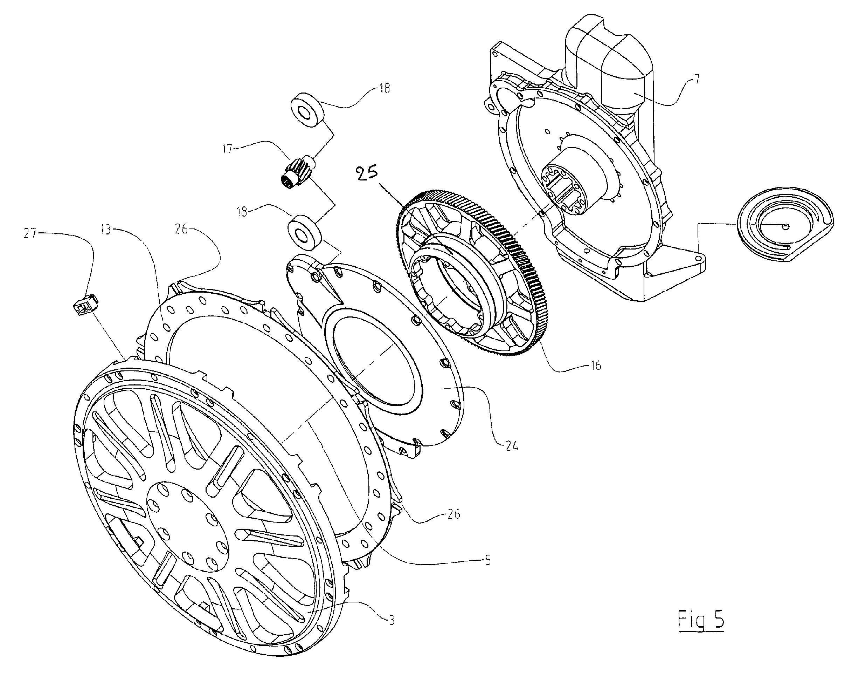

Les moyens de freinage comprennent un disque de frein 13 lié par sa périphérie à la roue 1 et une pince 14 solidaire du porte-roue 7 et disposée à l'intérieur du disque de frein 13. La pince chevauche donc le disque de frein par l'intérieur de celui-ci. Un avantage de cette disposition est une transmission directe des efforts de freinage vus par la roue, c'est à dire ici des efforts exercés par le pneumatique 4 sur la jante 2 du fait du freinage. De préférence, le disque de frein 13 est monté « flottant » sur la roue, c'est à dire que la liaison entre le disque de frein et la roue autorise des déplacements relatifs axisymétriques en particulier dans la direction radiale. L'amplitude de ces déplacements est limitée à quelques millimètres. Un montage flottant permet la dilatation thermique du disque et peut également permettre de réduire les échanges thermiques entre la roue et le disque de frein. La figure 5 illustre un mode de réalisation d'un tel montage. Sur cette figure, on voit des pions 27 solidaires du disque de roue 3, ces pions viennent se loger dans des encoches 26 du disque de frein 13.

La motorisation du véhicule est assurée par des moyens d'entraînement de la roue comprenant un moteur rotatif 15 monté sur le porte-roue 7. De préférence, le moteur 15 est un moteur électrique. Un moteur électrique peut en outre être utilisé comme ralentisseur et permettre de récupérer sous forme électrique une partie de l'énergie cinétique du véhicule. Dans ce cas, on peut réduire la puissance des moyens mécaniques de freinage.

Des moyens de réduction comprennent au moins une couronne dentée 16 liée à la roue et au moins un pignon 17 entraîné par le moteur rotatif 15. Une ou plusieurs roues dentées supplémentaires peuvent être intercalées entre le pignon moteur 17 et la couronne dentée 16 soit de façon permanente afin de permettre une réduction supplémentaire, soit de façon contrôlée afin d'offrir un choix de rapports de réduction.

Avantageusement, la pièce formant la couronne 16 constitue également le moyeu sur lequel la roue est fixée. Pour cela, les roulements de roue 6 sont disposés dans un alésage de la partie centrale de la couronne et la roue vient se boulonner sur un prolongement axial 25 de cette partie centrale.

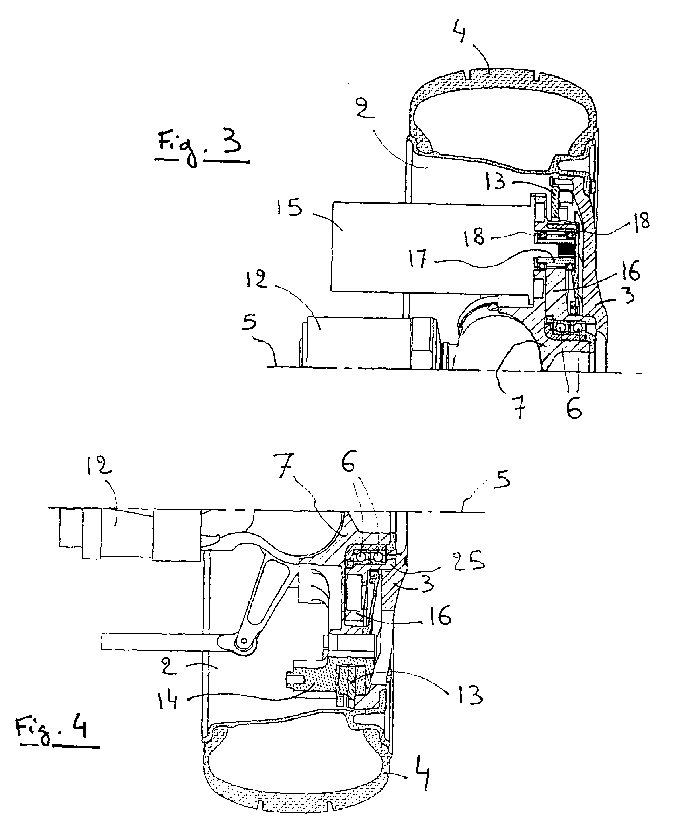

De préférence, le disque de frein 13, la couronne 16 et le pignon 17 sont disposés sensiblement dans le même plan, c'est à dire que leur encombrement total le long de l'axe 5 de la roue est sensiblement égal à l'encombrement axial de l'élément le plus large (ici le pignon). Cette caractéristique est bien reconnaissable sur la figure 3. On voit également que les roulements 6 sont eux aussi disposés sensiblement dans le même plan. On comprend que cette disposition avantageuse sur le plan de l'encombrement axial permet également une réduction de la masse et/ou une augmentation de la rigidité.

De préférence, le porte-roue 7 comporte une partie mâle autour de laquelle sont emmanchés les roulements de roue 6. Par rapport à la disposition de la demande EP 0878332 dans laquelle les roulements de roue sont tenus dans une ouverture centrale du porte-roue, la rigidité intrinsèque du guidage de la roue est sensiblement augmentée.

De préférence, le guidage du pignon 17 est une fonction réalisée par le porte-roue, par exemple par l'intermédiaire d'une paire de roulements 18 à billes ou à rouleaux. Le pignon n'est donc pas porté par l'axe du moteur 15 mais comporte ses propres moyens de guidage. Le pignon reste bien sûr entraîné par l'axe du moteur, par l'intermédiaire de moyens de liaison comme par exemple des cannelures complémentaires connues en soi. De cette façon, quelle que soit l'intensité du couple transmis, la qualité de l'engrènement du pignon avec la couronne dentée reste satisfaisante car elle n'est tributaire ni de la rigidité ni du guidage de l'axe du moteur.

De préférence, le pignon et la couronne ont une denture oblique.

Les moyens de guidage 11 du barreau 6 en translation sont " sans frottement ", c'est à dire qu'ils comportent aussi peu de frottements que possible. Un guidage par roulement est très approprié. On peut utiliser des galets 19 coopérant avec des chemins de roulement aménagés sur le barreau, les galets étant montés rotatifs sur et par rapport à l'organe de guidage. On pourrait aussi concevoir des surfaces de contact en glissement relatif, dans la mesure où elles comportent un traitement approprié ou bien dans la mesure où elles sont lubrifiées de façon suffisante. Par exemple, on peut utiliser un palier fluide.

De préférence, pour contrôler les mouvements de débattement de la roue, on utilise une machine électromécanique rotative 12. Cette machine électromécanique agit par l'intermédiaire d'un pignon de suspension (non représenté) sur une crémaillère 21 solidaire du barreau 8. Cette disposition présente l'avantage de se prêter particulièrement bien au pilotage actif des caractéristiques de suspension, et plus précisément au pilotage par voie électrique directe.

De préférence, un ressort 22 (par exemple hélicoïdal) agit entre le porte-roue 7 et les moyens de guidage 11 afin de reprendre une partie et de préférence l'intégralité de la charge statique du véhicule.

De préférence, l'axe 9 du barreau est positionné sensiblement sur l'axe de la roue 5 et sensiblement verticalement dans le plan central de la roue, c'est-à-dire que le barreau est parfaitement centré par rapport à la roue. Un avantage de cette disposition est qu'elle favorise la course de suspension et réduit les contraintes mécaniques sur le barreau et sur son guidage.

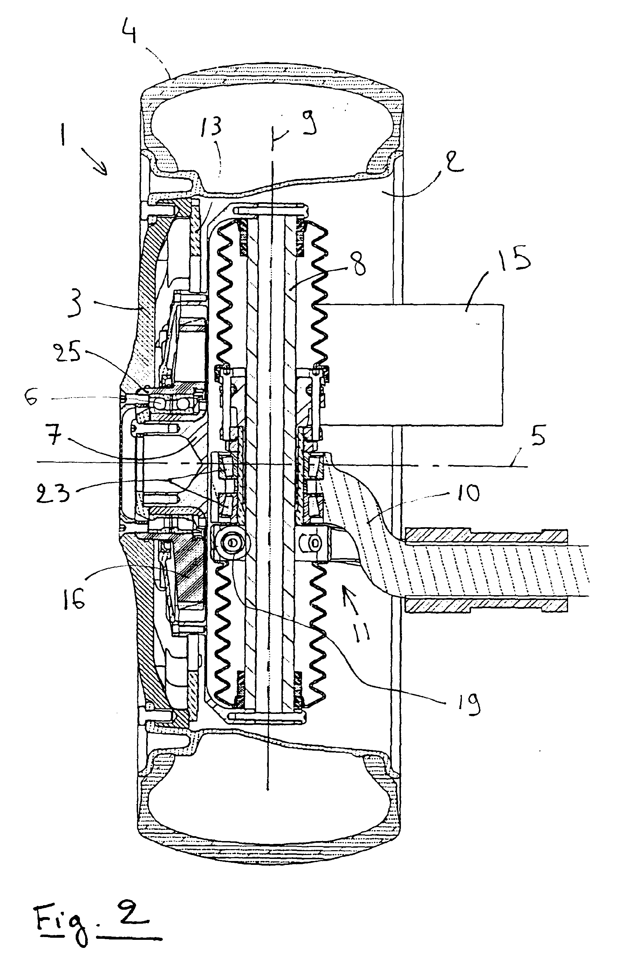

De préférence encore, lorsque la roue est une roue directrice du véhicule, l'axe 9 du barreau correspond également à l'axe de pivot. C'est le cas représenté ici. On voit sur la figure 2 que la liaison pivotante est assurée par un jeu de roulements coniques 23. Ces roulements autorisent la rotation des moyens de guidage 11 par rapport au support 10 autour de l'axe de pivot vertical. Lorsque l'axe de pivot est ainsi positionné, les roues directrices ne subissent que de très faibles moments de braquage du fait des efforts exercés par le sol.

On visualise bien sur la figure 5 que le porte-roue 7 constitue un carter recevant la couronne dentée 16 ainsi que le pignon 17. Ce carter est fermé par un couvercle étanche 24 afin d'isoler cet engrenage. Le carter peut contenir un lubrifiant adapté. On voit également bien sur cette figure le montage du pignon 17 sur une paire de roulements 18 dans ledit carter.

La roue 1 est de préférence assemblée à partir d'un disque de roue 3 et d'une jante 2, tous deux réalisés en alliage léger. Comme cela est représenté sur les différentes figures, la jante est de préférence monobloc, c'est à dire réalisée d'une seule pièce.

Les figures montrent bien l'intérêt de l'invention quant à l'encombrement mécanique des différents éléments. La compacité de la liaison au sol selon l'invention permet par exemple d'utiliser une roue suffisamment étroite pour qu'elle ne vienne pas en contact avec les trottoirs lors des manoeuvres de parking (voir figure 2).

Sur le plan du poids, l'avantage apporté par l'invention est également substantiel. En effet, on peut comparer le mode de réalisation préféré de la demande de brevet EP 0878332 (visible aux figures 1 et 2 de ladite demande) au mode de réalisation préféré de la présente demande. Alors que la course de la suspension a été augmentée de 145 mm à 170 mm et que le diamètre de la roue a été augmenté de 16 à 17 pouces, on constate une réduction de l'ordre de 20 % de la masse non suspendue.

Aux différentes figures, on reconnaît un pneumatique 4 monté sur la jante 2 de manière tout à fait conventionnelle. On pourrait bien entendu adopter d'autres solutions, comme un pneumatique accroché définitivement à sa jante, ou bien un bandage élastique non gonflé ou non pneumatique.

## Revendications

1. Liaison au sol pour véhicule, ladite liaison au sol comprenant une roue (1), un porte-roue (7), des moyens d'entraînement de la roue par au moins un moteur rotatif (15) solidaire du porte-roue, des moyens de réduction comprenant au moins couronne dentée (16) liée à la roue et au moins un pignon (17) lié au moteur rotatif (15), une suspension à coulisse de la roue par rapport à un support (10) lié au véhicule, des moyens de freinage, lesdits moyens de freinage comprenant un disque de frein (13), ladite liaison au sol étant **caractérisée en ce que** le disque de frein (13) est lié par sa périphérie à la rouee (1), une pince de frein (14) étant disposée à l'intérieur du disque de frein (13) le guidage de l'ensemble tournant comprenant la roue (1), le disque de frein (13) et la couronne (16) étant assuré par une paire de roulements (6) disposés autour d'une partie mâle du porte-roue (7).

2. Liaison au sol selon la revendication 1 dans laquelle le disque de frein, le pignon moteur (17) et la couronne dentée (16) sont disposés sensiblement dans un même plan.

3. Liaison au sol selon l'une des revendications précédentes dans laquelle le pignon (17) et la couronne (16) ont une denture oblique, le pignon étant guidé par rapport au porte-roue par des moyens de guidage (18) indépendamment de l'axe du moteur rotatif (15).

4. Liaison au sol selon l'une des revendications précédentes dans laquelle la suspension à coulisse comporte un barreau (8) solidaire du porte-roue, l'axe (9) du barreau étant positionné sensiblement sur l'axe (5) de la roue et sensiblement verticalement dans le plan central de la roue, le degré de liberté de suspension du porte-roue (7) par rapport au châssis du véhicule étant permis par le mouvement du barreau (8) dans des moyens de guidage (11) liés au support (10).

5. Liaison au sol selon l'une des revendications précédentes comprenant en outre une machine électromécanique (12) de contrôle des mouvements de suspension.

6. Liaison au sol selon la revendication 5 dans laquelle la machine électromécanique est une machine rotative solidaire d'un pignon de suspension, ledit pignon coopérant avec une crémaillère (20) solidaire du barreau (8).

7. Liaison au sol selon l'une des revendications précédentes comprenant en outre une liaison pivotante (23) des moyens de guidage (11) par rapport au support (10) afin de permettre le braquage de la roue (1) autour d'un axe de pivot.

8. Liaison au sol selon la revendication 7 dans laquelle l'axe de pivot correspond sensiblement à l'axe (9) du barreau.

9. Liaison au sol selon l'une des revendications précédentes dans laquelle la roue est assemblée à partir d'un disque de roue (3) et d'une jante monobloc (2).

## Claims

1. Ground contact system for a vehicle, the said ground contact system comprising a wheel (1), a hub carrier (7), means for driving the wheel using at least one rotary motor (15) secured to the hub carrier, reduction means comprising at least one gearwheel (16) connected to the wheel and at least one pinion (17) connected to the rotary motor, a sliding-bar suspension suspending the wheel from a support (10) connected to the vehicle, braking means, the said braking means comprising a brake disc (13), the said ground contact system being **characterized in that** the brake disk is connected by its periphery to the wheel, a brake calliper (14) being positioned inside the brake disc, the guiding of the rotary assembly comprising the wheel, the brake disc and the gearwheel being afforded by a pair of rolling bearings (6) positioned around a male part of the hub carrier (7).

2. Ground contact system according to Claim 1, in which the brake disc, the motor pinion and the gearwheel are located substantially in the same plane.

3. Ground contact system according to one of the preceding claims, in which the pinion and the gearwheel have helical teeth, the pinion being guided with respect to the hub carrier by guide means (18) independently of the axis of the rotary motor (15).

4. Ground contact system according to one of the preceding claims, in which the sliding-bar suspension comprises a bar (8) secured to the hub carrier, the axis (9) of the bar being positioned substantially along the axis (5) of the wheel and substantially vertically in the central plane of the wheel, the degree of freedom of suspension of the hub carrier with respect to the chassis of the vehicle being permitted by the movement of the bar in guide means (11) connected to the support (10).

5. Ground contact system according to one of the preceding claims, further comprising an electromechanical machine (12) for controlling the suspension movements.

6. Ground contact system according to Claim 5, in which the electromechanical machine is a rotary machine secured to a suspension pinion, the said pinion collaborating with a rack (20) secured to the bar (8).

7. Ground contact system according to one of the preceding claims, further comprising a pivoting connection (23) between the guide means (11) and the support (10) so as to allow the wheel to be steered about a pivot axis.

8. Ground contact system according to Claim 7, in which the pivot axis substantially corresponds to the axis (9) of the bar.

9. Ground contact system according to one of the preceding claims, in which the wheel is assembled from a wheel disc (3) and a unitary rim (2).

## Patentansprüche

1. Bodenverbindung für ein Fahrzeug, wobei die Bodenverbindung ein Rad (1), einen Radhalter (7), Einrichtungen zum Antrieb des Rads durch mindestens einen fest mit dem Radhalter verbundenen Drehmotor (15), Untersetzungseinrichtungen, die mindestens einen mit dem Rad verbundenen Zahnkranz (16) und mindestens ein mit dem Drehmotor (15) verbundenes Ritzel (17) enthalten, eine gleitende Aufhängung des Rads bezüglich eines mit dem Fahrzeug verbundenen Trägers (10) und Bremseinrichtungen enthält, wobei die Bremseinrichtungen eine Bremsscheibe (13) enthalten, wobei die Bodenverbindung **dadurch gekennzeichnet ist, dass** die Bremsscheibe (13) über ihren Umfang mit dem Rad (1) verbunden ist, wobei eine Bremszange (14) im Inneren der Bremsscheibe (13) angeordnet ist, wobei die Führung der das Rad (1), die Bremsscheibe (13) und den Kranz (16) enthaltenden drehenden Einheit von einem Paar von Lagern (6) gewährleistet wird, die um einen Einsteckteil des Radhalters (7) herum angeordnet sind.

2. Bodenverbindung nach Anspruch 1, bei der die Bremsscheibe, das Antriebsritzel (17) und der Zahnkranz (16) im Wesentlichen in der gleichen Ebene angeordnet sind.

3. Bodenverbindung nach einem der vorhergehenden Ansprüche, bei der das Ritzel (17) und der Kranz (16) eine schräge Zahnung haben, wobei das Ritzel bezüglich des Radhalters von Führungseinrichtungen (18) unabhängig von der Achse des Drehmotors (15) geführt wird.

4. Bodenverbindung nach einem der vorhergehenden Ansprüche, bei der die gleitende Aufhängung eine fest mit dem Radhalter verbundene Stange (8) aufweist, wobei die Achse (9) der Stange im Wesentlichen auf der Achse (5) des Rads und im Wesentlichen senkrecht in der zentralen Ebene des Rads positioniert ist, wobei der Aufhängungsfreiheitsgrad des Radhalters (7) bezüglich des Fahrgestells des Fahrzeugs von der Bewegung der Stange (8) in den mit dem Träger (10) verbundenen Führungseinrichtungen (11) ermöglicht wird.

5. Bodenverbindung nach einem der vorhergehenden Ansprüche, die außerdem eine elektromechanische Maschine (12) zur Überwachung der Aufhängungsbewegungen enthält.

6. Bodenverbindung nach Anspruch 5, bei der die elektromechanische Maschine eine fest mit einem Aufhängungsritzel verbundene Drehmaschine ist, wobei das Ritzel mit einer fest mit der Stange (8) verbundenen Zahnstange (20) zusammenwirkt.

7. Bodenverbindung nach einem der vorhergehenden Ansprüche, die außerdem eine Schwenkverbindung (23) der Führungseinrichtungen (11) bezüglich des Trägers (10) enthält, um das Einschlagen des Rads (1) um eine Schwenkachse zu erlauben.

8. Bodenverbindung nach Anspruch 7, bei der die Schwenkachse im Wesentlichen der Achse (9) der Stange entspricht.

9. Bodenverbindung nach einem der vorhergehenden Ansprüche, bei der das Rad ausgehend von einer Radscheibe (3) und einer einstückigen Felge (2) zusammengebaut wird.
